# EUROPEAN PATENT SPECIFICATION

(11) **EP 2 597 763 B1**
(45) Date of publication and mention of the grant of the patent: **05.07.2017**
(21) Application number: 11382359.5
(22) Date of filing: 23.11.2011
(51) Int. Cl.: H02M 7/487, H02M 1/12, H02M 1/14

(54) **Method for controlling the unbalanced voltage in the DC side of a power converting apparatus, and power converting apparatus**
Verfahren zur Steuerung der gleichstromseitigen Spannungsunsymmetrie eines Stromrichters, und Stromrichter
Méthode pour commander la tension déséquilibrée dans le côté CC d'un convertisseur, et convertisseur

(43) Date of publication of application: 29.05.2013
(73) Proprietor: Ingeteam Power Technology, S.A., 48170 Zamudio (Bizkaia) (ES)
(72) Inventor: Sanchez Ruiz, Alain, 48170 Zamudio (ES); Abad Biain, Gonzalo, 48170 Zamudio (ES); Alvarez Hidalgo, Silverio, 48170 ZAMUDIO (ES)
(74) Representative: Igartua, Ismael

(56) References cited:
- K. Imarazene, H. Chekireb, E.M. Berkouk: "Selective Harmonics Elimination PWM with Self-Balancing DC-link Capacitors in Five-Level Inverter", International Conference On Renewable Energy And Power Quality (ICREPQ'11) , 15 April 2011 (2011-04-15), XP002674756, Las Palmas de Gran Canaria Retrieved from the Internet: URL:http://www.icrepq.com/icrepq'11/281-im arazene.pdf [retrieved on 2012-04-24]
- LALILI D ET AL: "Self balancing of DC link capacitor voltages using redundant vectors for SVPWM controlled five-level inverter", SYSTEMS, SIGNALS AND DEVICES, 2008. IEEE SSD 2008. 5TH INTERNATIONAL MULTI-CONFERENCE ON, IEEE, PISCATAWAY, NJ, USA, 20 July 2008 (2008-07-20), pages 1-6, XP031395703, ISBN: 978-1-4244-2205-0
- Khoukha Imarazene, H. Chekireb, E.M. Berkouk: "Balancing DC Link Using the Redundant States Method in Selective Harmonics Elimination PWM", ELECTROMOTION 2009-EPE Chapter 'Electric Drives' Joint Symposium , 3 July 2009 (2009-07-03), XP002674758, Retrieved from the Internet: URL:http://ieeexplore.ieee.org/stamp/stamp .jsp?tp=&arnumber=5259076 [retrieved on 2012-04-24]

## Description

### TECHNICAL FIELD

The invention relates to methods for controlling the unbalanced voltage on the DC side of power converting apparatuses, which are adapted to convert direct-voltage power into alternating-voltage power, and to power converting apparatuses.

### PRIOR ART

Power converting apparatuses that are adapted to convert direct-voltage power into alternating-voltage power comprise at least one converter that has the function of performing said conversion. The quality of the output voltage wave increases with the number of levels it comprises, although the greater the number of levels the greater the complexity in implementing the converter, so that, generally speaking, industrial applications are commonly based on apparatuses with two- or three-level converters, although the number of levels is now being increased.

The converter comprises a plurality of switches that are switched on or off in a controlled manner to selectively provide different voltage levels in the output voltage wave. A voltage wave may be obtained by using different switching patterns for the switches, which provide an average voltage value that is the same in all cases but which provides the voltage levels in a different way, as it is shown for example in the document EP 2312739 A1.

For three-level converters in particular, for example, the apparatus comprises two capacitors in series connection on the DC side, so that three voltage levels are obtained from a direct-voltage: an intermediate level or zero potential at a neutral point of connection of both capacitors; a positive level or potential corresponding to the voltage in a capacitor in relation to the neutral point; and a negative level or potential corresponding to the value of the voltage of the other capacitor in relation to the neutral point. The number of levels of the output voltage wave per branch of a converter generally depends on the number of capacitors disposed in series on the DC side, the apparatus comprising more than one neutral point when more than three voltage levels are to be obtained in the output voltage wave in this case, as said apparatus comprises more than two capacitors connected in series on the DC side and the point of connection between each two capacitors corresponds with a neutral point.

It is advisable the total voltage on the DC side to be distributed equally between the various existing capacitors to obtain the correct modulation, a converter output voltage wave of good quality being obtained. In multi-level converters, however, the voltages of the capacitors on the DC side may become unbalanced due to the difference in current running toward the different capacitors. An unbalance in these voltages may cause additional harmonic distortion in the output alternating-voltage waves of the converter and, as a result, reduce their quality. In addition, the unbalance may cause the maximum operating voltage of the switches of the converter (or one of them) to be exceeded, which may cause the destruction of said switches.

Various alternatives for controlling the voltage at the neutral point are known from prior art. Document US 7573732 B2 discloses a power converting apparatus in which the voltage is balanced on the DC side between the different capacitors. The apparatus comprises two capacitors connected to a neutral point, and to balance the voltages at least one additional element is used to absorb or consume the excess of energy generated at the neutral point. Said element, that may be a resistor for example, absorbs or consumes the excess of current that runs to one of the capacitors, so that it allows the voltages of both capacitors to remain balanced.

Document US 5627742 A discloses a power converting apparatus with a three-level converter for converting a direct-voltage of the capacitors on the DC side into at least one alternating-voltage wave per phase, which comprises two capacitors on the DC side connected to a neutral point, and in which the voltages in the capacitors are balanced without using additional elements. In the apparatus disclosed in this document, to achieve the balance a switching pattern used on the switches of the converter is acted on, taking into account the initial situation of the voltages in the capacitors and the polarity of the corresponding output current, the output current corresponding in each case to the current of the corresponding phase generated by the converter. As a result, at least one of the commutations by means of which the level in the output voltage wave of the converter is changed is moved. The conference paper of K. Imarazene, H. Chekireb, E.M. Berkouk titled "Selective Harmonics Elimination PWM with Self-Balancing DC-link Capacitors in Five-Level Inverter" (International Conference On Renewable Energy And Power Quality (ICREPQ'11), 15 April 2011 (2011-04-15), Las Palmas de Gran Canaria) discloses a method for controlling the unbalanced voltage on the DC side of a power converter and a power converter comprising a plurality of capacitors disposed in series on the DC side of the converter.

### BRIEF DESCRIPTION OF THE INVENTION

It is an object of the invention to provide a method for controlling the unbalanced voltage on the DC side of a power converting apparatus as described in the claims.

The method of the invention is designed to control the voltage on the DC side of a power converting apparatus that comprises at least one H-Bridge converter and a plurality of capacitors disposed in series on the DC side. The connection of each two capacitors corresponds with a neutral point.

The method comprises a conversion stage in which a direct-voltage supplied by the capacitors is converted into at least one multi-level alternating-voltage wave for each branch of the converter by means of a specific modulation, an output voltage wave being obtained by combining the voltage waves of two branches, and a control stage in which the direction of a current towards at least one neutral point is acted on to control the unbalanced voltage on the DC side of the apparatus and which is executed during the conversion stage. The unbalance is thus controlled by acting on the neutral point (or neutral points).

In the conversion stage the method carries out the conversion by means of a selective harmonic elimination modulation or SHE in which a plurality of vectors are applied for each output voltage wave, some of said vectors comprising at least one associated redundant vector that affects a same neutral point causing a current in said neutral point in the opposite direction to that caused by their associated vector, and which generates a same output voltage level in the corresponding voltage wave. In the control stage the vector to be applied is selected, between a vector and its associated redundant vector, to control the unbalanced voltage at the neutral point acting on the direction of the current towards the neutral point.

As a result, with the method of the invention the unbalanced voltage on the DC side is controlled without the output wave being affected as, although it acts on at least one neutral point on the DC side, the level of said voltage wave on the AC side is not modified. The control on the unbalance on the DC side and on the shape of the voltage wave applied by the converter on the AC side (or on the output) are thus independent, the unbalance being possible to be controlled while the quality of the output voltage wave of the converter is maintained.

It is another object of the invention to provide a power converting apparatus as described in the claims. The advantages obtained with the apparatus are analogous to these obtained with the method.

These and other advantages and characteristics of the invention will be made evident in the light of the drawings and the detailed description thereof.

### DESCRIPTION OF THE DRAWINGS

Figure 1 shows an embodiment of an H-Bridge converter of a power converting apparatus according to the invention, with two capacitors in series on the DC side.
Figure 2 shows an embodiment of a cascade H-Bridge converter of a power converting apparatus according to the invention.
Figure 3 shows a NPC topology of the converter of Figure 1.
Figure 4 shows an embodiment of an apparatus according to the invention, which comprises a three-phase power converter.
Figure 5 shows a NPC topology of the converter of Figure 4.
Figure 6 shows a voltage wave of three output levels of a three-level branch of an H-bridge of a converter of an apparatus according to either of Figures 1 or 2.
Figure 7 shows an output voltage wave generated from three-level branches of an H-bridge of a converter of an apparatus according to the invention, with five output levels.

### DETAILED DESCRIPTION OF THE INVENTION

One aspect of the invention relates to a method for controlling the unbalanced voltage on the DC side of a power converting apparatus that comprises a plurality of capacitors disposed in series on the DC side, and at least one multi-level H-bridge converter 1. Each point of connection between every two capacitors corresponds with a neutral point O, so that there are as many neutral points O as capacitors disposed in series minus one. The method is not restricted to its use in apparatuses 100 according to their application, as a result of which the capacitors on the DC side of the apparatus 100 must be galvanically isolated in relation to the DC buses of the rest of the H-bridges (if there are any), said capacitor being possible to be supplied, for example, by sources that are galvanically isolated from each other, the proposed method not being affected.

It is advisable the total voltage on the DC side to be equally distributed between the various existing capacitors to obtain the correct modulation, a converter output voltage wave of good quality being obtained, although in multi-level converters the voltages of the capacitors on the DC side may be unbalanced due to the difference in current running towards the different capacitors. An unbalance in these voltages may cause additional harmonic distortion in the output alternating-voltage waves of the converter and, as a result, reduce their quality. In addition, the unbalance may cause the maximum operating voltage of the switches of the converter (or one of them) to be exceeded, which may cause the destruction of said switches. The method of the invention aims to control this unbalance.

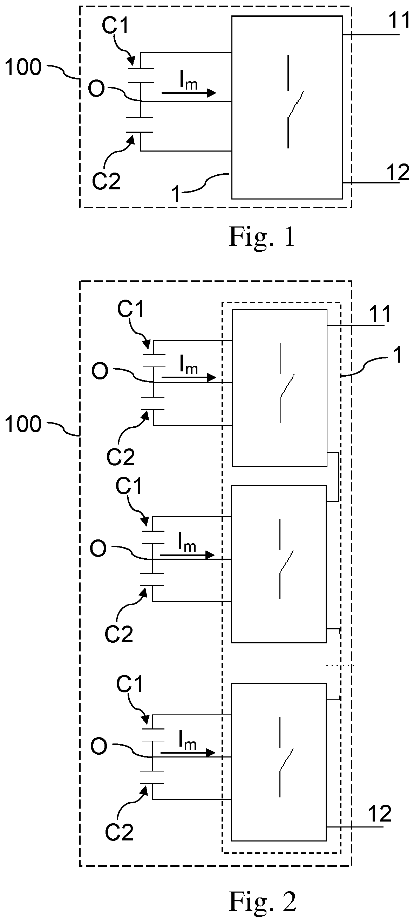

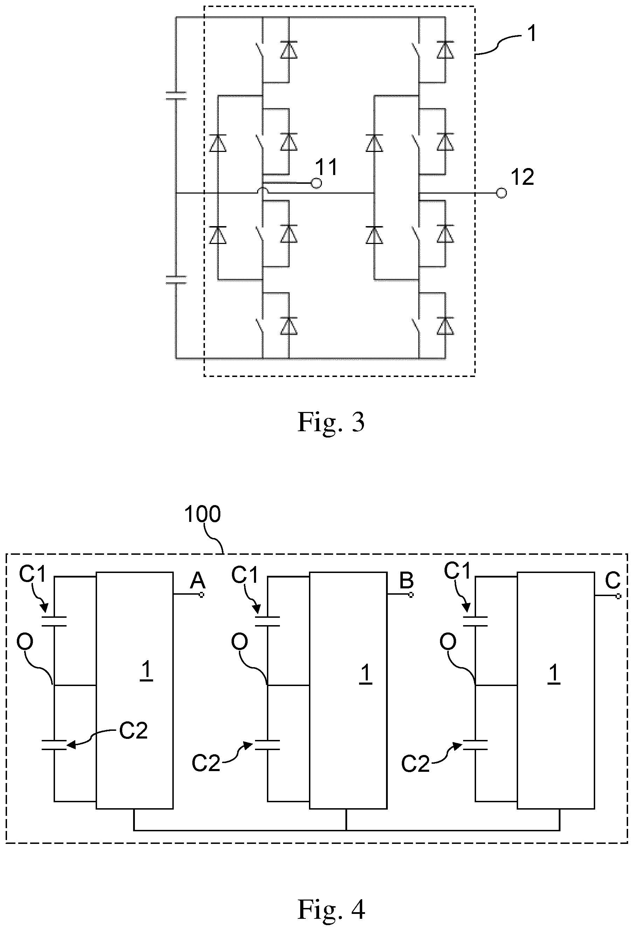

By way of example, Figure 1 shows an apparatus 100 with a converter 1 with a single H-bridge and two branches 11 and 12, Figure 2 shows an apparatus 100 with a converter 1 with a plurality of cascade H-bridges and two branches 11 and 12, and Figure 4 shows a three-phase apparatus 100 that comprises a converter 1 for each phase, said converter 1 being possible to comprise a single H-bridge or a plurality of cascaded H-bridges. Figures 1, 2 and 4 show an apparatus 100 with two capacitors C1 and C2 disposed in series on the DC side, comprising as a result a single neutral point O, although this representation is given by way of example and an apparatus 100 may have a different number of capacitors disposed in series and therefore a different number of neutral points O. Furthermore, although for the purpose of clarity same references have been used for all the converters 1 and capacitors C1 and C2 shown, all of them are independent from each other, in other words, each one is a different member to the preceding one.

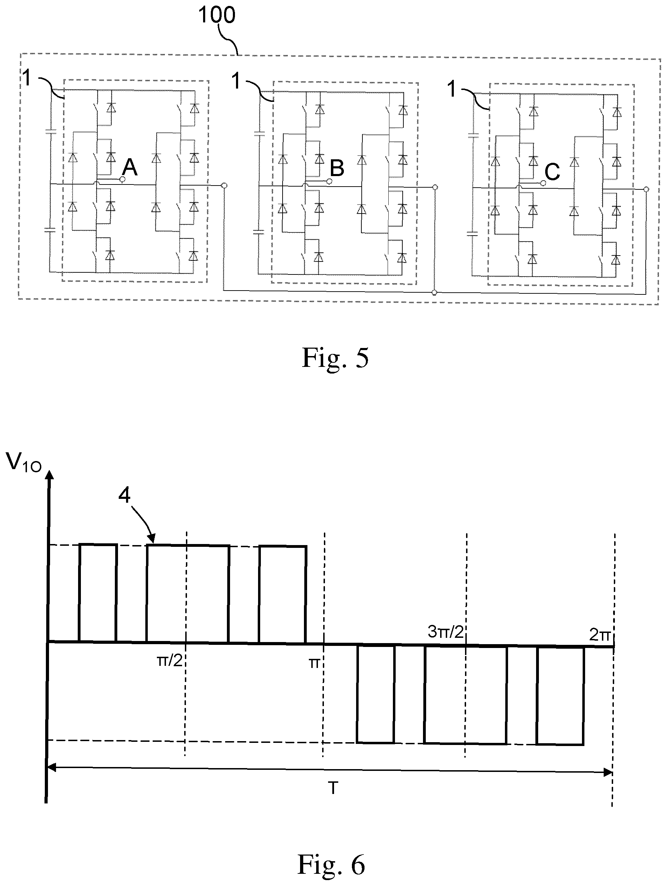

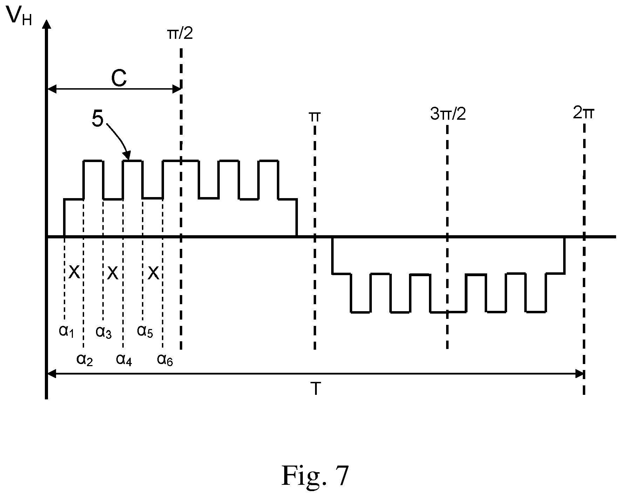

The method comprises a conversion stage in which a direct-voltage DC supplied by the capacitors is converted into at least one multi-level alternating-voltage wave 4 per branch 11 and 12 of the multi-level H-bridge shown by way of example in Figure 6, which shows the development of a voltage V_{1O} of a branch 11 in relation to the neutral point O, by means of a specific modulation. In the examples of Figures 1 and 2, for example, as two capacitors C1 and C2 are comprised in series the voltage wave 4 of each branch 11 and 12 comprises three voltage levels, as is already known from the prior art, an output voltage wave 5 comprising five voltage levels being generated combining the two branches 11 and 12 as shown by way of example in Figure 7, which shows the evolution of a voltage V_{H}. In the example of Figure 4 a same thing occurs as in Figures 1 and 2, the alternating-voltage waves representative of the three phases A, B and C of the three-phase apparatus 100 being given as outputs. If the apparatus 100 comprised four capacitors on the DC side, the voltage wave 4 corresponding to each branch 11 and 12 would comprise five voltage levels, and so on. Generally speaking, the voltage wave 4 of a branch 11 and 12 comprises as many voltage levels as capacitors that the apparatus 100 comprises on the DC side plus one, and the output voltage wave 5 comprises as many voltage levels as twice the number of levels of a voltage wave 4 of a branch 11 and 12 minus one.

An H-bridge converter 1 comprises two multi-level branches 11 and 12, and each branch 11 and 12 comprises a plurality of controlled switches such as IGCTs or IGBTs, for example, and a plurality of diodes, and the resulting alternating-voltage wave 4 in each branch 11 and 12 of the H-bridge depends on the switching sequence of said switches, the proper switching sequences to obtain the required voltage wave 4 in each case being obtained with the modulation. The topology of the branches of the H-bridge to be used for a converter 1 may be any known multi-level topology with a capacitive neutral point that can be used for an H-bridge converter 1, such as a topology with NPC, NPP or MPC branches. Figure 3 shows, by way of example, an H-bridge converter 1 with an NPC topology, and Figure 5 shows, by way of example, an apparatus 100 with a three-phase converter 1 with an NPC topology.

In the conversion stage the method carries out the conversion by means of a selective harmonic elimination modulation or SHE, which is based on the calculation of pre-determined switching angles with which a shape of voltage wave 4 per branch 11 and 12 is generated, which facilitates a voltage wave 5 free of a number of harmonics that can be eliminated and which is determined beforehand, as a result of which a plurality of vectors are applied for each voltage wave 4 to generate the correct switching sequence of the switches for each branch 11 and 12. For this purpose a required switching pattern for each voltage wave 4 is determined, which corresponds with the output voltage level required for the voltage wave 5, each switching pattern having at least one associated vector sequence, which depends on the number of angles determined and on the values of the calculated angles. The mode in which the angles are obtained is not detailed as it is already known and is not the object of the invention.

For an output voltage wave 5 of five levels obtained from two voltage waves 4 per branch 11 and 12 of three levels, at certain points a same level in the output voltage wave 5 can be achieved by applying different vectors. These vectors are known as redundant vectors, and in this case they act on a same neutral point O (the only one in this case) with a current Iₘ at the neutral point O in opposing directions, the output voltage level of the corresponding voltage wave 5 not being affected. Figure 7 illustrates with an X the point or time interval in which the redundant vectors can be applied for a SHE modulation of six angles α₁ - α₆ in an H-bridge. For output voltage waves 5 of more than five levels, obtained from voltage waves 4 per branch 11 and 12 with more than three levels, the apparatus 100 comprises more than two capacitors in series and more than one neutral point O on the DC side. In this case, in some time intervals there are a plurality of vectors that generate a same voltage level in the output voltage wave 5 but which affect different neutral points O, vectors known as redundant vectors, while there can also be more than one vector affecting a same neutral point O with a current Iₘ at the neutral point O in opposing directions. As a result, for voltage waves 4 of more than three levels per branch 11 and 12 there are points or time intervals in which a vector to be applied can be selected from two or more options the voltage level of the output voltage waves 5 not being affected, for controlling the voltage at the required neutral point O (or at the only neutral point O if the voltage waves 4 have three levels) and thereby preventing an unbalance between the voltages of the capacitors on the DC side of the apparatus 100 or reducing or eliminating an unbalance present in said voltages.

The method comprises a control stage in which the unbalanced voltage on the DC side is controlled and which is carried out during the conversion stage. For this purpose, in said control stage the vector to be applied in a time interval X in which different vectors can be applied to obtain a same output voltage level in the corresponding voltage wave 4 is selected, in other words, the redundant vector to be applied is selected, at least one neutral point O being acted on with a current Iₘ in one or another direction according to the redundant vector applied. As a result, thanks to the control of the direction of the current Iₘ charges or discharges of the proper capacitors can be applied to reduce or eliminate the unbalance or to prevent an unbalance from being generated. In the case of voltage waves 4 per branch 11 and 12 of with more than three levels, in the control stage the neutral point O to be acted on is also selected, so that a vector that directly affects said neutral point O and with a current Iₘ in the required direction is selected, if this were possible. In the example shown in Figure 4 each converter 1 comprises a plurality of connected capacitors, in this case two, and the method is used to control the unbalance in each of the capacitors of each converter 1. This also occurs in the example of Figure 2, where the converter 1 comprises a plurality of H-bridges, a plurality of capacitors (in this case two) being connected to each H-bridge.

The control of the unbalanced voltage of the neutral point O is carried out to prevent an unbalance between the voltages of the various capacitors present on the DC side of the apparatus 100, so that the maximum operating voltage of the switches of the corresponding converter 1 (or one of them) is prevented from being exceeded, and a possible additional harmonic distortion in the alternating-voltage waves 4 and 5 due to said unbalance is also prevented or reduced. In short, by controlling the unbalanced voltage on the DC side the aim is to prevent an unbalance from occurring, and if it does occur the aim is to reduce or eliminate it. An unbalanced voltage at the neutral point O should be understood as the difference between the voltages of the capacitors which are connected in series by said neutral point O. For that reason the direction of the current Iₘ of the neutral point O is acted on by means of the application of redundant vectors, so that the required distribution of charges is achieved between the capacitors that share the neutral point O with the current Iₘ being acted on. The voltages of the capacitors are thus balanced the resulting output voltage waves 5 of the conversion not being distorted, and the harmonics to be eliminated in the output voltage waves 5 with the SHE modulation used being thus eliminated, so that the regulation of the unbalanced voltage on the DC side (the balance of the voltages of the capacitors on the DC side) and of the shape of the output alternating-voltage wave 5 applied by the converter 1 are independent, which implies a more rigorous control of the characteristics to be controlled.

To select the vector to be applied, the method also comprises a calculation stage that can comprise different embodiments and which is carried out during the conversion stage. In a first embodiment of the calculation stage, from the phase difference between the voltage of the output voltage wave 5 and the output current of the corresponding converter 1 or the current per branch 11, 12 of said converter 1, or from the corresponding power factor, the behaviour of the unbalanced voltage at the neutral point O or of the current Iₘ at said neutral point O (or at the various neutral points O) is predicted instantaneously, and with the voltage of the capacitors on the DC side of apparatus 100 a prediction is made towards where the unbalance must be corrected or towards where it has to be corrected to prevent it from increasing. In the control stage the selection of the vector to be applied is made taking into account said predictions.

In a second embodiment of the calculation stage, the method comprises a previous stage in which, on the basis of pre-calculated angles, values representative of the behaviour of the unbalanced voltage or of the current Iₘ at the neutral point O (or at the various neutral points O) are predicted according to different possible values of the phase difference between the output voltage wave 5 and the output current of the corresponding converter 1 or the current per branch 11, 12 or said converter 1, or according to possible values of the corresponding power factor. Using different combinations of the aforementioned values different behaviours of the unbalanced voltage or of the current Iₘ at the neutral point O are pre-calculated, and in a data-storage stage the aforementioned different possible values are stored, along with related behaviours of the voltage at the neutral point O, for example in a look-up table. The pre-calculation and the storage stage are carried out before the modulation is carried out, and can thus be carried out at the factory, for example. In the second embodiment of the calculation stage the behaviour of the unbalanced voltage or of the current Iₘ at the neutral point O (or at the various neutral points O) is predicted by comparing the value of the phase difference between the output voltage wave 5 and the output current of the corresponding converter 1 or the current per branch 11, 12 of said converter 1, or of the power factor, with the corresponding stored values, and the behaviour of the unbalanced voltage or of the current Iₘ at the neutral point O is predicted by selecting the pre-calculated value of the behaviour that is related to the stored combination closest to the actual value reading. In the control stage the selection of the vector to be applied is made by taking into account said prediction.

To obtain a specific output voltage wave 5 different switching patterns of the switches connected to each branch 11 and 12 can be used, which provide an average voltage value equal in all cases but which provide the required voltage levels in a different way. As commented above, the possible vectors to be applied depend on the switching pattern to be applied, as a result of which in the calculation stage, for any of its embodiments, the prediction of the unbalance is made by taking into account the possible switching patterns to be applied. The possible patterns to be applied, along with the vectors associated to each switching pattern, are stored beforehand, in factory for example. In the control stage the switching pattern to be selected is selected by taking into account the predictions made in the calculation stage for the various possible switching patterns, and once the switching pattern to be applied is known, a vector sequence to be applied and associated to said pattern is selected, the correct selection being made between the redundant vectors, as commented above. In the control stage the switching pattern considered the most appropriate is selected depending on the direction of the required average current Iₘ at the neutral point O, and on the switching pattern applied beforehand.

The conversion stage is carried out continuously, and the calculation and control stages are carried out simultaneously with the conversion stage and in a cyclical manner, the control stage being carried out prior to the calculation stage. Preferably the calculation and control stages are applied every π/2 radians of the voltage wave 4 or 5, but may be applied with a different period such as π radians, 2π radians or n times π/2 radians, for example, n being a positive whole number. For the purposes of clarity, in the rest of the document said intervals are termed control cycles C. In addition, the duration of the control cycles C does have to be set before the modulation is carried out, and can be altered as many times as required during its operation, and each control cycle C can even have a specific duration. In a control cycle C the calculation and control stages relating to the subsequent control cycle C are carried out, the switching pattern and the vectors to be applied in the following control cycle C being determined in a control cycle C. In a control cycle C the duration of the following control cycle C can also be determined.

In a preferred embodiment of the method, the vector sequences associated to each possible switching pattern are pre-defined so that a vector and its associated redundant vector are applied in an alternated way in a single vector sequence, as a result of which depending on the order in which each vector and its redundant vector is applied and on the current of the converter 1 (on the power factor), the average current Iₘ value at a neutral point O can have one or another direction. As a result, in the control stage an evaluation is made of how to act on a same neutral point O, generating an average value of the current Iₘ at said neutral point O in one or another direction, in order to select the order of the vectors to be applied, the vector sequence to be applied corresponding to the selected switching pattern thus being selected.

Thus, in the preferred embodiment and for the case of three-level voltage waves 4, as the redundant vectors are applied in an alternated way and as a vector sequence associated to a switching pattern selected for each control cycle C is applied, the vector to be applied can be selected in the first point or time interval X of each control cycle C where it is possible to make a selection between different vectors to select the complete vector sequence to be applied. Thus, the direction of the average value of the current Iₘ at the neutral point O in a control cycle C is varied by modifying the order of application of the redundant vectors of a vector sequence applied in a set switching pattern to be applied in said control cycle C, as a result of selecting the first redundant vector.

The decision to apply one order of redundant vectors or another in a control cycle C, in other words, the direction of the average value of the current Iₘ at the neutral point O in a control cycle C, can be made by also taking into account a hysteresis threshold for the difference in voltages between the various capacitors on the DC side of the apparatus 100 (a hysteresis threshold for fixing a maximum unbalance). In this case, then, said hysteresis threshold is compared with the difference in voltages of the capacitors, which can be measured. If the absolute value of the difference in voltages is greater than the preset hysteresis threshold, for the control cycle C another order of vectors is set in the vector sequence to be applied, in other words, the order of the alternation is changed. Thus, in this case, in a control cycle C a selected vector sequence is applied, and in the following control cycle C another vector sequence is applied that causes the opposite effect at the neutral point O. It is clear that the vector sequence does not have to be changed in each control cycle, the sequence changes for control cycles C that require it according to whether the hysteresis threshold value has been exceeded or not, or if there is a change in the modulation rate, for example. The hysteresis threshold can also correspond with a fixed value, or can be variable, varying according to the modulation rate, to the frequency of the composite voltage wave 5 and to the current of the load to which the converter 1 is connected. By using a variable hysteresis a degree of additional freedom is added, which may be used, for example, to optimise the voltage ripple in the bus capacitors, its influence in the composite voltage 5, etc.

The proposed method, as well as guaranteeing the control of the balance of the neutral point O, provides certain additional characteristics that enable or can enable the voltage ripple of the capacitors on the DC side of the apparatus 100 to be reduced and the power losses to be equally distributed between the different branches of the corresponding converter 1, so that the performance of the converter 1 can be optimised.

Another aspect of the invention relates to a power converting apparatus 100 that comprises a plurality of capacitors disposed in series on the DC side, at least one electronic H-bridge power converter 1 to convert the direct-voltage DC supplied by the capacitors into at least one multi-level alternating-voltage wave 4 per branch 11 and 12 by means of a specific modulation, and control means adapted to control the unbalanced voltage on the DC side of an apparatus 100. The converter 1 is adapted to carry out the conversion by means of a selective harmonic elimination modulation or SHE, in which a plurality of vectors is applied for each voltage wave 4 per branch 11 and 2.

The apparatus 100 of the invention is adapted to carry out the aforementioned method, as a result of which the explanations given for the method also serve to explain the operation of the apparatus 100, as well as the explanations relating to the apparatus 100 itself, to the converter 1 and any other member comprised in the apparatus 100. The control means of the apparatus 100 are adapted to carry out some stages of the method such as the conversion stage, the control stage, and the calculation stage. The control means may correspond with a micro-controller, a micro-processor, an FPGA or an equivalent device capable of carrying out said stages. The apparatus 100 also comprises detection means (not shown in the figures) to determine the voltage of each capacitor on the DC side, and of the output current of the corresponding converter 1, it being capable of comprising detection means to carry out all the detections or detection means for each of them. The detection means to be used (sensors, etc) may be conventional detection means. unbalanced voltage on the DC side of an apparatus 100. The converter 1 is adapted to carry out the conversion by means of a selective harmonic elimination modulation or SHE, in which a plurality of vectors is applied for each voltage wave 4 per branch 11 and 12.

The apparatus 100 of the invention is adapted to carry out the aforementioned method, as a result of which the explanations given for the method also serve to explain the operation of the apparatus 100, as well as the explanations relating to the apparatus 100 itself, to the converter 1 and any other member comprised in the apparatus 100. The control means of the apparatus 100 are adapted to carry out some stages of the method such as the conversion stage, the control stage, and the calculation stage. The control means may correspond with a micro-controller, a micro-processor, an FPGA or an equivalent device capable of carrying out said stages. The apparatus 100 also comprises detection means (not shown in the figures) to determine the voltage of each capacitor on the DC side, and of the output current of the corresponding converter 1, it being capable of comprising detection means to carry out all the detections or detection means for each of them. The detection means to be used (sensors, etc) may be conventional detection means.

The apparatus 100 can also comprise a memory (not shown in the figures) for the storage of data, as referred to in the explanation relating to the method. As commented in the method, not all the embodiments require the storage of values, as a result of which in some cases the apparatus does not need to comprise a memory. In the event of it comprising a memory, said memory may be a separate member or may be built into the control means for example.

## Claims

1. Method for controlling the unbalanced voltage on the DC side of a power converting apparatus comprising at least one H-bridge converter (1) with two branches (11, 12) and a plurality of capacitors (C1, C2) disposed in series on the DC side, each point of connection between each two capacitors (C1, C2) corresponding with a neutral point (O), the method comprising a conversion stage in which a direct-voltage supplied by the capacitors (C1, C2) is converted into at least one multi-level alternating-voltage wave (4) per branch (11, 12) by means of a specific modulation, an output voltage wave (5) being obtained by combining the voltage waves (4) of two branches (11, 12), and a control stage in which the unbalanced voltage on the DC side of an apparatus (100) is controlled and which is carried out during the conversion stage, in the conversion stage the method carrying out the conversion by means of a selective harmonic elimination modulation or SHE in which a plurality of vectors are applied for each output voltage wave (5), different vectors being possible to be applied in a same time interval (X) to obtain a same output voltage level in the corresponding voltage wave (5), and, in the control stage, the vector to be applied in a time interval (X) in which different vectors can be applied to obtain the output voltage level in the corresponding voltage wave (5) is selected, at least one neutral point (O) being acted on with a current (Iₘ) in one or another direction according to the vector applied, **characterised in that** the selection between two redundant vectors that act on a same neutral point (O) with a same current (Iₘ) but in opposing directions is performed in an alternated way, so that if in a first selection a vector is selected between the possible redundant vectors to be selected, that implies a current (Iₘ) at the neutral point (O) in one direction, the next time that a same selection can be made a vector is selected that implies a current (Iₘ) at the neutral point (O) in the opposite direction.

2. Method according to claim 1, wherein in the control stage the switching pattern to be applied for each voltage wave (4) is also selected, to obtain the required output voltage wave (5), said selection also being taken into account for selecting the vector to be applied.

3. Method according to claims 1 or 2, comprising prior to the control stage and being carried out during the conversion stage, a calculation stage in which the behaviour of the unbalanced voltage or of the current (Iₘ) at the neutral point (O) to be acted on is predicted according to the value of the phase difference between the voltage of the output voltage wave (4; 5) and the output current of the converter (1) or the current per branch (11, 12) of said converter (1), or to the corresponding power factor, and the average value of the current (Iₘ) at the neutral point (O) and towards where said average value is generated is predicted, the unbalanced voltage of the corresponding capacitors (C1, C2) on the DC side of the apparatus (100) being affected, the redundant vector to be applied being selected in the control stage taking into account said predictions.

4. Method according to claim 1 or 2, comprising prior to the control stage and being carried out during the conversion stage, a calculation stage in which values representative of the behaviour of the unbalanced voltage or of the current (Iₘ) at the neutral point (O) to be acted on are predicted on the basis of pre-calculated values, said pre-calculated values comprising, for different possible modulation rates, the phase difference between the voltage of the voltage wave (4; 5) and the output current of the corresponding converter (1) or the current per branch (11,12) of said converter (1), or the power factor, and in which the average value of the current (Iₘ) at the neutral point (O) and towards where said average value is generated is predicted, the unbalanced voltage of the capacitors (C1,C2) being affected according to pre-calculated possible voltage values of the capacitors (C1, C2), the behaviour of the unbalanced voltage or of the current (Iₘ) at the neutral point (O) to be acted on being predicted by comparing the real value of the phase difference between the voltage of the voltage wave (4; 5) and the output current of the corresponding converter (1) or the current per branch (11, 12) of said converter (1), or the power factor, with the corresponding pre-calculated data, and the average value of the current (Iₘ) at the neutral point (O) and towards where said average value is generated being predicted, the unbalanced voltage of the capacitors (C1,C2) being affected, the voltage of the corresponding capacitors (C1, C2) being compared with the corresponding pre-calculated data, the redundant vector to be applied being selected in the control stage taking into account said predictions.

5. Method according to any of the preceding claims, wherein the voltage waves (4) of each branch (11, 12) comprise more than three levels, the neutral point (O) to be acted on being selected in the control stage according to the voltages of the capacitors.

6. Method according to any of the preceding claims, wherein a pre-set hysteresis threshold is predetermined for the difference in voltages between the various capacitors (C1, C2), and said hysteresis threshold is compared with the real difference in voltages of the capacitors (C1, C2), the result of said comparison being taken into account for selecting the correct vector.

7. Method according to claim 6, wherein the hysteresis threshold is a constant value.

8. Method according to claim 6, wherein the hysteresis threshold is a variable value that depends on the modulation rate, on the frequency of the voltage wave (4; 5) and on a current of a charge to which the converter (1) is connected.

9. Power converting apparatus comprising a plurality of capacitors (C1, C2) disposed in series on the DC side, at least one electronic H-bridge power converter (1) with two branches (11, 12) to convert the direct-voltage (DC) supplied by the capacitors (C1, C2) into at least one multi-level alternating-voltage wave (4) per branch (11, 12) by means of a specific modulation, an output voltage wave (5) being obtained by combining the voltage waves (4) of two branches (11, 12), and control means adapted to control the unbalanced voltage on the DC side of an apparatus (100), the converter (1) being adapted to carry out the conversion by means of a selective harmonic elimination modulation or SHE in which a plurality of vectors are applied for each output voltage wave (5), different vectors being possible to be applied in a same time interval (X) to obtain a same output voltage level in the corresponding output voltage wave (5), and in that the control means are adapted to select the vector to be applied in a time interval (X) in which different vectors can be applied to obtain a same output voltage level in the corresponding voltage wave (5), by acting on at least one neutral point (O) with a current (Iₘ) in one or another direction according to the vector applied, **characterised in that** the control means apply the vectors that act on a same neutral point (O) with opposing directions of the current (Iₘ) in an alternated way.

10. Apparatus according to claim 9, wherein the control means are also adapted to select the switching pattern to be applied for each voltage wave (4), for the required output voltage wave (5), and to take this selection into account to select the vector to be applied.

11. Apparatus according to claim 10, comprising detection means to detect the voltage of each capacitor (C1, C2) and the value of the output current of the corresponding converter (1), the control means being adapted to predict the behaviour of the unbalanced voltage or of the current (Iₘ) at the neutral point (O) according to the possible phase difference values between the corresponding voltage wave (4; 5) and the output current detected and, according to the required modulation rate and the switching patterns to be used, to predict the average value of the current (Iₘ) at the neutral point (O) and towards where said average value is generated, the unbalanced voltage being affected according to the voltages of the detected capacitors (C1, C2), and to select a vector between the possible redundant vectors to be applied taking into account said predictions.

12. Apparatus according to any of claims 9 to 11, wherein the control means are adapted to compare a pre-determined hysteresis threshold with the voltage difference of the capacitors (C1, C2) to predict the behaviour of the voltage or of the current (Iₘ) at the neutral point (O) in accordance with the result of said comparison, and to select the appropriate vector.

## Patentansprüche

1. Verfahren zur Regelung der unsymmetrischen Spannung auf der GS-Seite einer Leistungsumwandlungsvorrichtung, die mindestens einen H-Brückenwandler (1) mit zwei Zweigen (11, 12) und eine Mehrzahl von Kondensatoren (C1, C2) umfasst, die auf der GS-Seite in Reihe geschaltet sind, wobei jeder Verbindungspunkt zwischen jeweils zwei Kondensatoren (C1, C2) einem neutralen Punkt (O) entspricht, wobei das Verfahren eine Umwandlungsphase, in welcher eine Gleichspannung, die von den Kondensatoren (C1, C2) geliefert wird, durch eine spezifische Modulation in mindestens eine mehrstufige Wechselspannungswelle (4) pro Zweig (11, 12) umgewandelt wird, eine Ausgangsspannungswelle (5) durch Kombinieren der Spannungswellen (4) von zwei Zweigen (11, 12) erhalten wird, und eine Regelphase umfasst, in welcher die unsymmetrische Spannung auf der GS-Seite einer Vorrichtung (100) geregelt wird und welche während der Umwandlungsphase ausgeführt wird, das Verfahren in der Umwandlungsphase die Umwandlung durch eine selektive Oberschwingungsbeseitigungsmodulation bzw. SHE ausführt, wobei eine Mehrzahl von Vektoren für jede Ausgangsspannungswelle (5) angewendet wird, wobei es möglich ist, verschiedene Vektoren in einem gleichen Zeitintervall (X) anzuwenden, um einen gleichen Ausgangsspannungspegel in der entsprechenden Spannungswelle (5) zu erhalten, und in der Regelphase der Vektor, der in einem Zeitintervall (X) angewendet werden soll, in welchem verschiedene Vektoren angewendet werden können, um den Ausgangsspannungspegel in der entsprechenden Spannungswelle (5) zu erhalten, ausgewählt wird, wobei auf mindestens einen neutralen Punkt (O) mit einem Strom (Iₘ) in einer oder der anderen Richtung gemäß dem angewendeten Vektor gewirkt wird, **dadurch gekennzeichnet, dass** die Auswahl unter zwei redundanten Vektoren, die auf einen gleichen neutralen Punkt (O) mit einem gleichen Strom (Iₘ), aber in entgegengesetzten Richtungen wirken, abwechselnd durchgeführt wird, so dass, falls bei einer ersten Auswahl unter den möglichen redundanten Vektoren, die ausgewählt werden sollen, ein Vektor ausgewählt wird, der einen Strom (Iₘ) am neutralen Punkt (O) in einer Richtung impliziert, das nächste Mal, wenn eine gleiche Auswahl durchgeführt werden kann, ein Vektor ausgewählt wird, der einen Strom (Iₘ) am neutralen Punkt (O) in der entgegengesetzten Richtung impliziert.

2. Verfahren nach Anspruch 1, wobei in der Regelphase das Schaltmuster, das für jede Spannungswelle (4) angewendet werden soll, außerdem so ausgewählt wird, dass die erforderliche Ausgangsspannungswelle (5) erhalten wird, wobei die Auswahl auch zum Auswählen des anzuwendenden Vektors berücksichtigt wird.

3. Verfahren nach Anspruch 1 oder 2, umfassend vor der Regelphase eine während der Umwandlungsphase ausgeführte Berechnungsphase, in welcher das Verhalten der unsymmetrischen Spannung oder des Stroms (Iₘ) am neutralen Punkt (O), auf den gewirkt werden soll, gemäß dem Wert des Phasenunterschieds zwischen der Spannung der Ausgangsspannungswelle (4; 5) und dem Ausgangsstrom des Wandlers (1) oder dem Strom pro Zweig (11, 12) des Wandlers (1) oder gemäß dem entsprechenden Leistungsfaktor vorhergesagt wird, und der Mittelwert des Stroms (Iₘ) am neutralen Punkt (O) und, in welcher Richtung der Mittelwert erzeugt wird, vorhergesagt wird, wobei die unsymmetrische Spannung der entsprechenden Kondensatoren (C1, C2) auf der GS-Seite der Vorrichtung (100) beeinflusst wird, und der anzuwendende redundante Vektor in der Regelphase unter Berücksichtigung der Vorhersagen ausgewählt wird.

4. Verfahren nach Anspruch 1 oder 2, umfassend vor der Regelphase eine während der Umwandlungsphase durchgeführte Berechnungsphase, in welcher Werte, die für das Verhalten der unsymmetrischen Spannung oder des Stroms (Im) am neutralen Punkt (O), auf den gewirkt werden soll, kennzeichnend sind, auf der Basis von vorausberechneten Werten vorhergesagt werden, wobei die vorausberechneten Werte für verschiedene mögliche Modulationsraten den Phasenunterschied zwischen der Spannung der Spannungswelle (4; 5) und dem Ausgangsstrom des entsprechenden Wandlers (1) oder dem Strom pro Zweig (11, 12) des Wandlers (1) oder den Leistungsfaktor umfassen, und in welcher der Mittelwert des Stroms (Iₘ) am neutralen Punkt (O) und, in welcher Richtung der Mittelwert erzeugt wird, vorhergesagt wird, wobei die unsymmetrische Spannung der Kondensatoren (C1, C2) gemäß den vorausberechneten möglichen Spannungswerten der Kondensatoren (C1, C2) beeinflusst wird, das Verhalten der unsymmetrischen Spannung oder des Stroms (Iₘ) am neutralen Punkt (O), auf den gewirkt werden soll, durch Vergleichen des realen Wertes des Phasenunterschieds zwischen der Spannung der Spannungswelle (4; 5) und dem Ausgangsstrom des entsprechenden Wandlers (1) oder dem Strom pro Zweig (11, 12) des Wandlers (1) oder des Leistungsfaktors mit den entsprechenden vorausberechneten Daten vorhergesagt wird, und der Mittelwert des Stroms (Iₘ) am neutralen Punkt (O) und, in welcher Richtung der Mittelwert erzeugt wird, vorhergesagt wird, wobei die unsymmetrische Spannung der Kondensatoren (C1, C2) beeinflusst wird, die Spannung der entsprechenden Kondensatoren (C1, C2) mit den entsprechenden vorausberechneten Daten verglichen wird, und der anzuwendende redundante Vektor in der Regelphase unter Berücksichtigung der Vorhersagen ausgewählt wird.

5. Verfahren nach einem der vorhergehenden Ansprüche, wobei die Spanungswellen (4) jedes Zweiges (11, 12) mehr als drei Stufen umfassen, wobei der neutralen Punkt (O), auf den gewirkt werden soll, in der Regelphase gemäß den Spannungen der Kondensatoren ausgewählt wird.

6. Verfahren nach einem der vorhergehenden Ansprüche, wobei eine voreingestellte Hysterese-Schwelle für die Differenz von Spannungen zwischen den verschiedenen Kondensatoren (C1, C2) vorbestimmt wird, und die Hysterese-Schwelle mit der realen Differenz von Spannungen der Kondensatoren (C1, C2) verglichen wird, wobei das Ergebnis des Vergleichs zum Auswählen des korrekten Vektors berücksichtigt wird.

7. Verfahren nach Anspruch 6, wobei die Hysterese-Schwelle ein konstanter Wert ist.

8. Verfahren nach Anspruch 6, wobei die Hysterese-Schwelle ein variabler Wert ist, der von der Modulationsrate, von der Frequenz der Spannungswelle (4; 5) und von einem Strom einer Ladung abhängt, mit welcher der Wandler (1) verbunden ist.

9. Leistungsumwandlungsvorrichtung, umfassend eine Mehrzahl von Kondensatoren (C1, C2), die auf der GS-Seite in Reihe geschaltet sind, mindestens einen elektronischen H-Brücken-Leistungswandler (1) mit zwei Zweigen (11, 12) zum Umwandeln der Gleichspannung (DC), die von den Kondensatoren (C1, C2) geliefert wird, durch eine spezifische Modulation in mindestens eine mehrstufige Wechselspannungswelle (4) pro Zweig (11, 12), wobei eine Ausgangsspannungswelle (5) durch Kombinieren der Spannungswellen (4) von zwei Zweigen (11, 12) erhalten wird, und Regelmittel, die zum Regeln der unsymmetrischen Spannung auf der GS-Seite einer Vorrichtung (100) ausgelegt sind, wobei der Wandler (1) so ausgelegt ist, dass er die Umwandlung durch eine selektive Oberschwingungsbeseitigungsmodulation bzw. SHE ausführt, wobei eine Mehrzahl von Vektoren für jede Ausgangsspannungswelle (5) angewendet wird, wobei es möglich ist, verschiedene Vektoren in einem gleichen Zeitintervall (X) anzuwenden, um einen gleichen Ausgangsspannungspegel in der entsprechenden Ausgangsspannungswelle (5) zu erhalten, und dadurch, dass die Regelmittel so ausgelegt sind, dass sie den Vektor, der in einem Zeitintervall (X) angewendet werden soll, in welchem verschiedene Vektoren angewendet werden können, um einen gleichen Ausgangsspannungspegel in der entsprechenden Spannungswelle (5) zu erhalten, auswählen, indem auf mindestens einen neutralen Punkt (O) mit einem Strom (Iₘ) in einer oder der anderen Richtung gemäß dem angewendeten Vektor gewirkt wird, **dadurch gekennzeichnet, dass** die Regelmittel die Vektoren, die mit entgegengesetzten Richtungen des Stroms (Iₘ) auf einen gleichen neutralen Punkt (O) wirken, abwechselnd anwenden.

10. Vorrichtung nach Anspruch 9, wobei die Regelmittel außerdem so ausgelegt sind, dass sie das Schaltmuster, das für jede Spannungswelle (4) angewendet werden soll, für die erforderliche Ausgangsspannungswelle (5) auswählen und diese Auswahl zum Auswählen des anzuwendenden Vektors berücksichtigen.

11. Vorrichtung nach Anspruch 10, umfassend Erfassungsmittel zum Erfassen der Spannung jedes Kondensators (C1, C2) und des Wertes des Ausgangsstroms des entsprechenden Wandlers (1), wobei die Regelmittel so ausgelegt sind, dass sie das Verhalten der unsymmetrischen Spannung oder des Stroms (Iₘ) am neutralen Punkt (O) gemäß den möglichen Phasenunterschiedswerten zwischen der entsprechenden Spannungswelle (4; 5) und dem erfassten Ausgangsstrom und gemäß der erforderlichen Modulationsrate und den Schaltmustern, die verwendet werden sollen, vorhersagen, und den Mittelwert des Stroms (Iₘ) am neutralen Punkt (O) und, in welcher Richtung der Mittelwert erzeugt wird, vorhersagen, wobei die unsymmetrische Spannung gemäß den Spannungen der erfassten Kondensatoren (C1, C2) beeinflusst wird, und einen Vektor unter den möglichen redundanten Vektoren, die angewendet werden sollen, unter Berücksichtigung der Vorhersagen auswählen.

12. Vorrichtung nach einem der Ansprüche 9 bis 11, wobei die Regelmittel so ausgelegt sind, dass sie eine voreingestellte Hysterese-Schwelle mit der Spannungsdifferenz der Kondensatoren (C1, C2) vergleichen, um das Verhalten der Spannung oder des Stroms (Iₘ) am neutralen Punkt (O) gemäß dem Ergebnis des Vergleichs vorherzusagen und den geeigneten Vektor auszuwählen.

## Revendications

1. Procédé pour le contrôle de la tension non équilibrée sur le côté DC d'un appareil de conversion de puissance comprenant au moins un convertisseur à pont H (1) avec deux branches (11, 12) et une pluralité de condensateurs (C1, C2) disposés en série sur le côté DC, chaque point de connexion entre deux condensateurs (C1, C2) correspondant à un point neutre (O), le procédé comprenant une étape de conversion dans laquelle une tension directe fournie par les condensateurs (C1, C2) est convertie en au moins une onde de tension alternative multi-niveau (4) par branche (11, 12) au moyen d'une modulation spécifique, une onde de tension de sortie (5) étant obtenue en combinant les ondes de tension (4) de deux branches (11, 12) et une étape de contrôle dans laquelle la tension non équilibrée sur le côté DC d'un appareil (100) est contrôlée et qui est effectuée pendant l'étape de conversion, dans l'étape de conversion le procédé effectuant la conversion au moyen d'une modulation d'élimination d'harmonique sélective ou SHE dans laquelle une pluralité de vecteurs sont appliqués pour chaque onde de tension de sortie (5), différents vecteurs pouvant être appliqués dans un même intervalle de temps (X) afin d'obtenir un même niveau de tension de sortie dans l'onde de tension (5) correspondante et, dans l'étape de contrôle, le vecteur à appliquer dans un intervalle de temps (X) dans lequel différents vecteurs peuvent être appliqués afin d'obtenir le niveau de tension de sortie dans l'onde de tension (5) correspondante est sélectionné, au moins un point neutre (O) étant actionné avec un courant (Iₘ) dans une direction ou une autre selon le vecteur appliqué, **caractérisé en ce que** la sélection entre deux vecteurs redondants qui agissent sur un même point neutre (O) avec un même courant (Iₘ) mais dans des directions opposées est effectuée d'une manière alternative de façon à ce que dans une première sélection, un vecteur soit sélectionné entre les vecteurs redondants possibles à sélectionner, qui implique un courant (Iₘ) au point neutre (O) dans une direction, la prochaine fois qu'une même sélection peut être faite un vecteur est sélectionné qui implique un courant (Iₘ) au point neutre (O) dans la direction opposée.

2. Procédé selon la revendication 1, dans lequel, dans l'étape de contrôle, le motif de commutation à appliquer pour chaque onde de tension (4) est également sélectionné afin d'obtenir une onde de tension de sortie (5), ladite sélection étant également prise en compte pour la sélection du vecteur à appliquer.

3. Procédé selon la revendication 1 ou 2, comprenant, avant l'étape de contrôle et étant effectuée pendant l'étape de conversion, une étape de calcul dans laquelle le comportement de la tension non équilibrée ou du courant (Iₘ) au point neutre (O) à actionner est prédit selon la valeur de la différence de phase entre la tension de l'onde de tension de sortie (4 ; 5) et le courant de sortie du convertisseur (1) ou le courant par branche (11, 12) dudit convertisseur (1), ou le facteur de puissance correspondant et la valeur moyenne du courant (Iₘ) au point neutre (O) et la direction dans laquelle ladite valeur moyenne est générée est prédite, la tension non équilibrée des condensateurs (C1, C2) correspondants sur le côté DC de l'appareil (100) étant affectée, le vecteur redondant à appliquer étant sélectionné dans l'étape de contrôle en tenant compte desdites prédictions.

4. Procédé selon la revendication 1 ou 2, comprenant, avant l'étape de contrôle et étant effectuée pendant l'étape de conversion, une étape de calcul dans laquelle des valeurs représentatives du comportement de la tension non équilibrée ou du courant (Iₘ) au point neutre (O) à actionner sont prédites sur la base de valeurs pré-calculées, lesdites valeurs pré-calculées comprenant, pour différents taux de modulation possibles, la différence de phase entre la tension de l'onde de tension (4 ; 5) et le courant de sortie du convertisseur (1) correspondant ou le courant par branche (11, 12) dudit convertisseur (1), ou le facteur de puissance, et dans laquelle la valeur moyenne du courant (Iₘ) au point neutre (O) et la direction dans laquelle ladite valeur moyenne est générée est prédite, la tension non équilibrée des condensateurs (C1, C2) étant affectée selon des valeurs de tension possibles pré-calculées des condensateurs (C1, C2), le comportement de la tension non équilibrée ou du courant (Iₘ) au point neutre (O) à actionner étant prédit en comparant la valeur réelle de la différence de phase entre la tension de l'onde de tension (4 ; 5) et le courant de sortie du convertisseur (1) correspondant ou du courant par branche (11, 12) dudit convertisseur (1), ou le facteur de puissance, avec les données pré-calculées correspondantes, et la valeur moyenne du courant (Iₘ) au point neutre (O) et la direction dans laquelle ladite valeur moyenne est générée étant prédite, la tension non équilibrée des condensateurs (C1, C2) étant affectée, la tension des condensateurs correspondants (C1, C2) étant comparée avec les données pré-calculées correspondantes, le vecteur redondant à appliquer étant sélectionné dans l'étape de contrôle en tenant compte desdites prédictions.

5. Procédé selon l'une des revendications précédentes, dans lequel les ondes de tension (4) de chaque branche (11, 12) comprennent plus de trois niveaux, le point neutre (O) à actionner étant sélectionné dans l'étape de contrôle selon les tensions des condensateurs.

6. Procédé selon l'une des revendications précédentes, dans lequel un seuil d'hystérésis pré-réglé est prédéterminé pour la différence de tension entre les divers condensateurs (C1, C2) et ledit seuil d'hystérésis est comparé avec la différence réelle de entre les tensions des condensateurs (C1, C2), le résultat de ladite comparaison étant prise en compte pour la sélection du vecteur de correction.

7. Procédé selon la revendication 6, dans lequel le seuil d'hystérésis est une valeur constante.

8. Procédé selon la revendication 6, dans lequel le seuil d'hystérésis est une valeur variable qui dépend du taux de modulation, de la fréquence de l'onde de tension (4 ; 5) et d'un courant d'une charge à laquelle le convertisseur (1) est connecté.

9. Appareil de conversion de puissance comprenant une pluralité de condensateurs (C1, C2) disposés en série sur le côté DC, au moins un convertisseur de puissance électronique à pont H (1) avec deux branches (11, 12) pour convertir la tension continue (DC) fournie par les condensateurs (C1, C2) en au moins une onde de tension alternative multi-niveau (4) par branche (11, 12) au moyen d'une modulation spécifique, une onde de tension de sorite (5) étant obtenue en combinant les ondes de tension (4) de deux branches (11, 12) et des moyens de contrôle conçus pour contrôler la tension non équilibrée sur le côté DC d'un appareil (100), le convertisseur (1) étant conçu pour effectuer la conversion au moyen d'une modulation d'élimination sélective d'harmonique ou SHE, dans laquelle une pluralité de vecteurs sont appliqués pour chaque onde de tension de sortie (5), différents vecteurs pouvant être appliqués dans un même intervalle de temps (X) afin d'obtenir un même niveau de tension de sortie dans l'onde de tension de sortie (5) correspondante, et les moyens de contrôle étant conçus pour sélectionner le vecteur à appliquer dans un intervalle de temps (X) dans lequel différents vecteurs peuvent être appliqués afin d'obtenir un même niveau de tension de sortie dans l'onde de tension (5) correspondante, en agissant sur au moins un point neutre (O) avec un courant (Iₘ) dans une direction ou une autre selon le vecteur appliqué, **caractérisé en ce que** les moyens de contrôle appliquent les vecteurs qui agissent sur un même point neutre (O) avec des directions opposées du courant (Iₘ) de manière alternée.

10. Appareil selon la revendication 9, dans lequel les moyens de contrôle sont également conçus pour sélectionner le motif de commutation à appliquer pour chaque onde de tension (4), pour l'onde de tension de sortie (5) requise, et pour prendre en compte cette sélection pour sélectionner le vecteur à appliquer.

11. Appareil selon la revendication 10, comprenant des moyens de détection pour détecter la tension de chaque condensateur (C1, C2) et la valeur du courant de sortie du convertisseur (1) correspondant, les moyens de contrôle étant conçus pour prédire le comportement de la tension non équilibrée ou du courant (Iₘ) au point neutre (O) selon les valeurs de différence de phase possibles entre l'onde de tension (4 ; 5) correspondante et le courant de sortie détecté et, selon le taux de modulation requis et les motifs de commutation à utiliser, pour prédire la valeur moyen du courant (Iₘ) au point neutre (O) et la direction dans laquelle ladite valeur moyenne est générée, la tension non équilibrée étant affectée selon les tensions des condensateurs (C1, C2) détectés et pour sélectionner un vecteur entre les vecteurs redondants possibles à appliquer en tenant compte desdites prédictions.

12. Appareil selon l'une des revendications 9 à 11, dans lequel les moyens de contrôle sont conçus pour comparer un seuil d'hystérésis prédéterminé avec la différence de tension des condensateurs (C1, C2) pour prédire le comportement de la tension ou du courant (Iₘ) au point neutre (O) conformément au résultat de ladite comparaison et pour sélectionner le vecteur approprié.
